# EUROPEAN PATENT APPLICATION

(11) **EP 4 678 952 A1**
(43) Date of publication of application: **14.01.2026**
(21) Application number: 24770451.3
(22) Date of filing: 21.02.2024
(51) Int. Cl.: F16J 15/3204, F16J 15/3252

(54) **SEALING DEVICE**

(30) Priority: 10.03.2023 JP 2023037276
(71) Applicant: NOK Corporation, Minato-ku Tokyo 105-8585 (JP)
(72) Inventor: KAMIYA, Yusuke, Fukushima-shi, Fukushima 9601193 (JP); OHASHI, Shota, Fukushima-shi, Fukushima 9601193 (JP); SUGIYAMA, Junya, Fukushima-shi, Fukushima 9601193 (JP)
(74) Representative: Global IP Europe Patentanwaltskanzlei
(86) International application number: PCT/JP2024/006313
(87) International publication number: WO 2024/190338

(57) **Abstract**

A sealing device (100) is disposed in a gap (320) between an outer peripheral surface (210) of a rotation shaft (200) and an inner peripheral surface (310) of a shaft hole (301) in a housing (300) having the shaft hole (301) into which the rotation shaft (200) is inserted to seal the gap (320), and includes: a seal body (10) including a core metal (30) constituted by a metal material and a seal body constituent member (20) constituted by an elastic body, with which the core metal (30) is integrated, the seal body constituent member (20) including a lip portion (23); and a conductive lip (50) and a conductive protective ring (40) attached to the seal body (10), in which the protective ring (40) includes an abutting portion (41) abutting on the housing (300) and an inward extending portion (42) extending radially inward from the abutting portion (41), and the conductive lip (50) is integrated with the seal body (10) by being sandwiched between the inward extending portion (42) and the seal body (10).

## Description

### TECHNICAL FIELD

The present invention relates to a sealing device.

### BACKGROUND ART

A sealing device disposed in a gap between an outer peripheral surface of a rotation shaft and an inner peripheral surface of a shaft hole in a housing having the shaft hole into which the rotation shaft is inserted is known.

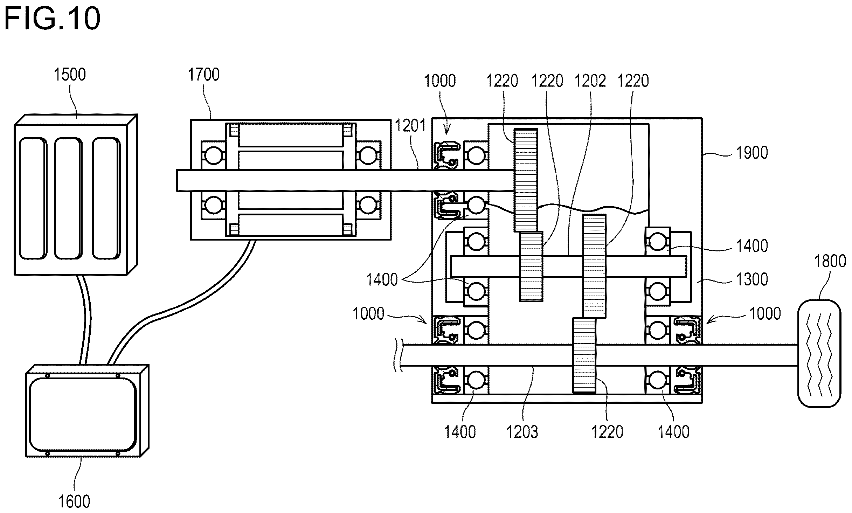

As illustrated in Fig. 10, the sealing device (sealing device 1000) can be used by being incorporated in a speed reducer 1900 of an electric vehicle (EV) or a fuel cell vehicle (FCV) as an example.

In the example of Fig. 10, the speed reducer 1900 includes a housing 1300, a first rotation shaft 1201, a second rotation shaft 1202, and a third rotation shaft 1203 provided in the housing 1300, and a plurality of bearings 1400 provided in the housing 1300 and respectively bearing the first rotation shaft 1201, the second rotation shaft 1202, and the third rotation shaft 1203.

The electric power of a battery 1500 is supplied to an electric motor 1700 via an inverter 1600, and the electric motor 1700 is driven, so that the first rotation shaft 1201 which is an output shaft of the electric motor 1700 rotates.

The first rotation shaft 1201, the second rotation shaft 1202, and the third rotation shaft 1203 are connected in this order via gears 1220. The rotation of the first rotation shaft 1201 is transmitted from the first rotation shaft 1201 to the second rotation shaft 1202, and further transmitted from the second rotation shaft 1202 to the third rotation shaft 1203. That is, the rotation of the first rotation shaft 1201 is transmitted to the third rotation shaft 1203 at a desired reduction ratio.

The third rotation shaft 1203 is provided with wheels 1800.

However, in a mechanism including the rotation shafts (the first rotation shaft 1201, the second rotation shaft 1202, and the third rotation shaft 1203) rotationally driven by the electric motor 1700 as in the example of Fig. 10, an induction current generated in the electric motor 1700 causes electromagnetic wave noise of an AM radio to be generated from the rotation shaft, or electrolytic corrosion is generated in the bearing 1400 due to generation of sparks in the bearing 1400.

In order to solve these problems, it is desirable to ensure energization between the rotation shaft and the housing 1300, that is, to ground the rotation shaft to the housing 1300.

As an existing technique for this purpose, there is an earth brush, but there are problems that it is necessary to ensure a dedicated space, brush abrasion powder is generated, and the like.

As a technology for solving the above-described problem, there is a sealing device including a conductive lip.

The sealing device of Patent Document 1 (seal ring of Patent Document 1) includes a seal body having a lip portion (seal lip of Patent Document 1) and a conductive lip (pre-seal of Patent Document 1) provided on an atmosphere-side surface of the seal body.

### CITATION LIST

### PATENT DOCUMENT

Patent Document 1: JP 2014-142065 A

### SUMMARY OF THE INVENTION

### PROBLEMS TO BE SOLVED BY THE INVENTION

However, according to the study of the inventors of the present application, there is room for improvement in the integrity between the conductive lip and the seal body in the technology of Patent Document 1.

The present invention has been made in view of the above problems, and provides a sealing device having a structure capable of achieving good integrity between a conductive lip and a seal body.

### MEANS FOR SOLVING THE PROBLEM

According to the present invention, there is provided a sealing device that is disposed in a gap between an outer peripheral surface of a rotation shaft and an inner peripheral surface of a shaft hole in a housing having the shaft hole into which the rotation shaft is inserted to seal the gap, the sealing device including:
a seal body including a core metal constituted by a metal material and a seal body constituent member constituted by an elastic body and with which the core metal is integrated, the seal body constituent member including a lip portion; and
a conductive lip and a conductive protective ring attached to the seal body, wherein
the protective ring includes an abutting portion abutting on the housing, and an inward extending portion extending radially inward from the abutting portion, and
the conductive lip is integrated with the seal body by being sandwiched between the inward extending portion and the seal body.

### EFFECT OF THE INVENTION

According to the present invention, it is possible to achieve good integrity between a conductive lip and a seal body.

### BRIEF DESCRIPTION OF THE DRAWINGS

[Fig. 1]Fig. 1 is a view illustrating a sealing device according to a first embodiment, and illustrates a cut end surface along an axial center of a rotation shaft.
[Fig. 2]Fig. 2 is a partially enlarged view of Fig. 1.
[Fig. 3]Fig. 3 is a view illustrating a sealing device according to a first modification of the first embodiment, and illustrates a cut end surface along an axial center of a rotation shaft.
[Fig. 4]Fig. 4 is a view illustrating a sealing device according to a second modification of the first embodiment, and illustrates a cut end surface along an axial center of a rotation shaft.
[Fig. 5]Fig. 5 is a view illustrating a sealing device according to a third modification of the first embodiment, and illustrates a cut end surface along an axial center of a rotation shaft.
[Fig. 6]Fig. 6 is an exploded perspective view of the sealing device according to the third modification of the first embodiment.
[Fig. 7]Fig. 7 is a view illustrating a sealing device according to a fourth modification of the first embodiment, and illustrates a cut end surface along an axial center of a rotation shaft.
[Fig. 8]Fig. 8 is a view illustrating a sealing device according to a fifth modification of the first embodiment, and illustrates a cut end surface along an axial center of a rotation shaft.
[Fig. 9]Fig. 9 is a view illustrating a sealing device according to a second embodiment, and illustrates a cut end surface along an axial center of a rotation shaft.
[Fig. 10]Fig. 10 is a schematic view for describing problems of a general sealing device.

### DESCRIPTION OF EMBODIMENTS

Hereinafter, embodiments of the present invention will be described with reference to the drawings. Note that, in all the drawings, the similar components are denoted by the same reference numerals, and the description thereof will not be repeated.

### [First Embodiment]

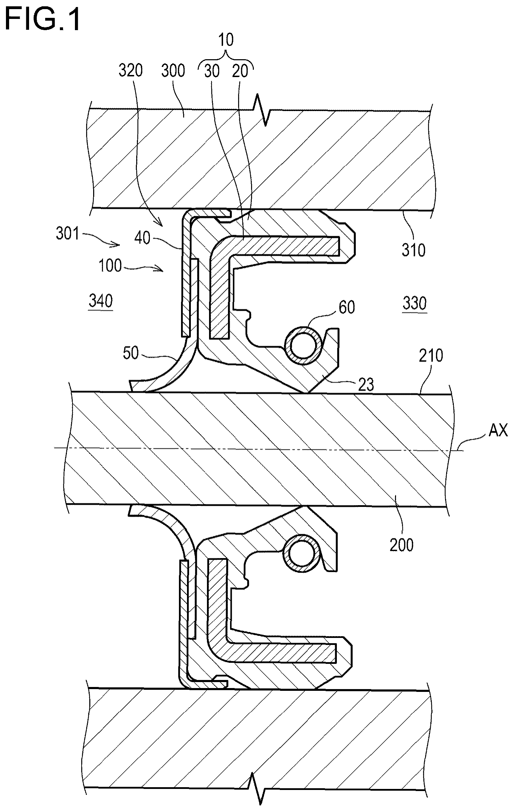

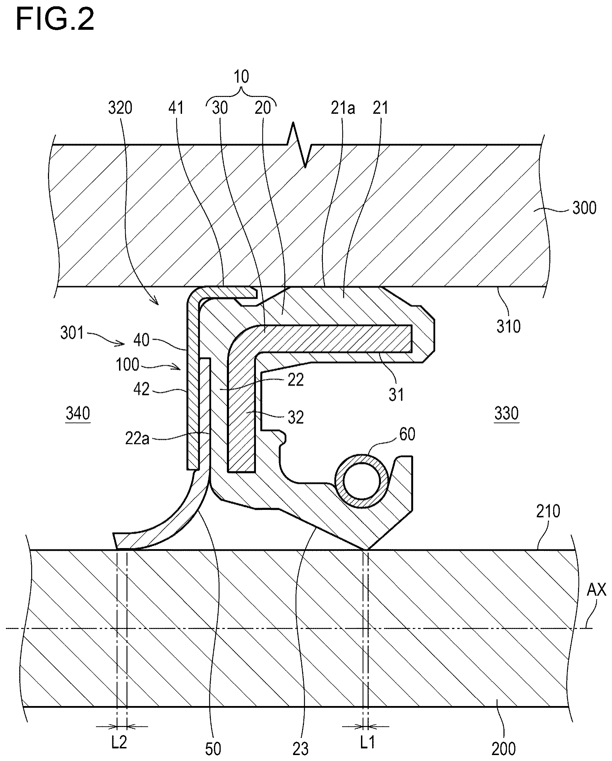

First, a first embodiment will be described with reference to Figs. 1 and 2.

A sealing device 100 according to the present embodiment is disposed in a gap 320 between an outer peripheral surface 210 of a rotation shaft 200 and an inner peripheral surface 310 of a shaft hole 301 in a housing 300 having a shaft hole 301 into which the rotation shaft 200 is inserted to seal the gap 320.

The sealing device 100 includes a seal body 10, a conductive lip 50 and a conductive protective ring 40 attached to the seal body 10.

The seal body 10 includes a core metal 30 constituted by a metal material and a seal body constituent member 20 constituted by an elastic body and in which the core metal 30 is integrated. The seal body constituent member 20 includes a lip portion 23.

The protective ring 40 includes an abutting portion 41 abutting on the housing 300 and an inward extending portion 42 extending radially inward from the abutting portion 41.

The conductive lip 50 is integrated with the seal body 10 by being sandwiched between the inward extending portion 42 and the seal body 10.

Here, the sealing device 100 is disposed in the gap 320 so that a central axis AX of the sealing device 100 coincides with an axial center of the rotation shaft 200.

In the following description, a direction orthogonal to the central axis AX is referred to as a radial direction.

In the radial direction, a direction away from the central axis AX is referred to as a radial outside, and a direction approaching the central axis AX is referred to as a radial inside.

Further, a direction around the central axis AX is referred to as a circumferential direction.

In addition, a direction along the central axis AX may be simply referred to as an axial direction.

Further, in the direction along the central axis AX, one side (right side in Figs. 1 and 2) is an inner side (inside) of the mechanism in which the sealing device 100 is provided, and the direction is referred to as an inner side 330. In the direction along the central axis AX, the other side (left side in Figs. 1 and 2) is an outer side (atmosphere side) of the mechanism in which the sealing device 100 is provided, and the direction is referred to as an outer side 340.

In the sealing device 100 according to the present embodiment, when the sealing device 100 is assembled to the housing 300 and the gap 320 of the shaft hole 301 of the housing 300 is sealed, the protective ring 40 and the conductive lip 50 each form a portion of a conductive path between the housing 300 and the rotation shaft 200. Thus, it is possible to ensure energization between the rotation shaft 200 and the housing 300 through the protective ring 40 and the conductive lip 50, that is, to ground the rotation shaft to the housing 300. Therefore, it is possible to suppress generation of electromagnetic wave noise of the AM radio from the rotation shaft and generation of electrolytic corrosion of the bearing.

Moreover, in the sealing device 100 according to the present embodiment, since the conductive lip 50 is integrated with the seal body 10 by being sandwiched between the inward extending portion 42 and the seal body 10, it is possible to achieve good integration between the conductive lip 50 and the seal body 10.

Since the sealing device 100 can be replaced with an existing sealing device, a space dedicated to a ground brush is unnecessary, and abrasion powder of the brush can be prevented from occurring.

In addition, unlike the technique of ensuring the electrical conduction between the rotation shaft 200 and the housing 300 by the conductive lip alone, the electrical conduction is secured by the conductive lip 50 and the protective ring 40 which is a metal member, and thus the electrical resistance of the conductive path from the rotation shaft 200 to the housing 300 can be reduced.

In the present invention, the lip portion 23 may be an oil lip or a dust lip.

In the present embodiment, the lip portion 23 is an oil lip. That is, the seal body 10 constitutes an oil seal body.

Since the sealing device 100 includes both the seal body 10 having the lip portion 23 as an oil lip and the conductive lip 50, it is possible to achieve both oil sealing performance and conductivity while reducing the number of components and an installation space.

By disposing the conductive lip 50 on the outer side 340 (atmosphere side) of the contact portion between the lip portion 23, which is an oil lip, and the rotation shaft 200, it is possible to impart conductivity without impairing the oil sealing performance.

In the sealing device 100, the lip portion 23 and the conductive lip 50 suppress intrusion of foreign matter from the outer side 340 to the inner side 330, and the lip portion 23 suppresses leakage of a lubricant from the inner side 330 to the outer side 340.

Hereinafter, the present embodiment will be described in more detail.

The mechanism in which the sealing device 100 is disposed (mounted) is, for example, a speed reducer of an electric vehicle (EV) or a fuel cell vehicle (FCV), and includes a housing 300 constituted by a metal material. The housing 300 has a shaft hole 301 into which the rotation shaft 200 is inserted.

Note that, in general, of the sealing device 100 and the rotation shaft 200, the sealing device 100 is inserted and fixed into the shaft hole 301 first, and then the rotation shaft 200 is inserted.

The seal body constituent member 20 is formed in an annular shape centered on the central axis AX.

The seal body constituent member 20 includes, for example, a body abutting portion 21 formed in a cylindrical shape concentric with the central axis AX, a body inward extending portion 22 extending in an inner flange shape radially inward from one end (end on the outer side 340) of the body abutting portion 21 in the axial direction, and a lip portion 23 extending in the axial direction (toward the inner side 330) from a radially inner end of the body inward extending portion 22. The lip portion 23 also has a cylindrical shape concentric with the central axis AX.

The lip portion 23 is disposed inside the body abutting portion 21 while being away from the body abutting portion 21, and the body abutting portion 21 and the lip portion 23 face each other in the radial direction.

The seal body constituent member 20 is formed in a three-dimensional shape corresponding to a movement locus of a cut end surface shape of the seal body constituent member 20 illustrated in Fig. 2 when the cut end surface shape is rotated once around the central axis AX.

A portion of an outer peripheral surface of the body abutting portion 21 is a contact surface 21a that is circumferentially pressed against the inner peripheral surface 310 of the shaft hole 301.

The lip portion 23 is circumferentially brought into pressure contact with the outer peripheral surface 210 of the rotation shaft 200, and slides with respect to the outer peripheral surface 210 when the rotation shaft 200 rotates.

The sealing performance is secured by a pressure contact portion between the contact surface 21a and the inner peripheral surface 310 and a pressure contact portion between the lip portion 23 and the outer peripheral surface 210.

Hereinafter, the pressure contact portion between the contact surface 21a and the inner peripheral surface 310 and the pressure contact portion between the lip portion 23 and the outer peripheral surface 210 are collectively referred to as seal portions.

In the present embodiment, the lip portion 23 is an oil lip, and a region on the inner side 330 of the seal portion is filled with a lubricant such as lubricating oil.

Since the lip portion 23 is not required to have conductivity, a general sealing rubber material can be used as the material of the seal body constituent member 20.

Examples of such an elastic material include synthetic rubbers such as nitrile rubber (NBR), hydrogenated nitrile rubber (H-NBR), acrylic rubber (ACM), and fluororubber (FKM).

The entire seal body constituent member 20 is integrally molded.

More specifically, the seal body constituent member 20 is integrally molded with the core metal 30.

For example, the core metal 30 (and also, if necessary, a gutter spring 60 to be described later) is disposed in a molding die that is not shown in the drawings, an uncrosslinked rubber material is injected, and then the rubber material is crosslinked by heating and pressurizing the inside of the cavity of the molding die, whereby the seal body 10 in which the seal body constituent member 20 and the core metal 30 are integrally molded can be obtained.

Examples of the metal material constituting the core metal 30 include stainless steel (SUS) and cold rolled steel (SPCC).

The core metal 30 can be formed by press working or forging.

The core metal 30 includes, for example, a cylindrical portion 31 formed in a cylindrical shape concentric with the central axis AX, and a core metal inward extending portion 32 extending in an inner flange shape radially inward from one end (end on the outer side 340) of the cylindrical portion 31 in the axial direction.

In the present embodiment, the core metal inward extending portion 32 is formed in a flat plate shape orthogonal to the central axis AX and in a donut shape.

The core metal 30 is formed in a three-dimensional shape corresponding to a movement locus of a cut end surface shape of the core metal 30 illustrated in Fig. 2 when the cut end surface shape is rotated once around the central axis AX.

In the present embodiment, the entire core metal 30 is embedded in the seal body constituent member 20 and is not exposed from the seal body constituent member 20.

The cylindrical portion 31 is disposed, for example, from an inside of the body abutting portion 21 to an inside of a boundary portion between the body abutting portion 21 and the body inward extending portion 22. The core metal inward extending portion 32 is disposed from the inside of the boundary portion between the body abutting portion 21 and the body inward extending portion 22 to an inside of the body inward extending portion 22. For example, an inner peripheral edge of the core metal inward extending portion 32 is located near a boundary portion between the body inward extending portion 22 and the lip portion 23.

As described above, the protective ring 40 has the abutting portion 41 and the inward extending portion 42.

The abutting portion 41 is formed in, for example, a cylindrical shape concentric with the central axis AX.

The inward extending portion 42 extends radially inward in an inner flange shape from one end (end on the outer side 340) of the abutting portion 41 in the axial direction.

In the case of the present embodiment, the inward extending portion 42 is formed in a flat plate shape orthogonal to the central axis AX and in a donut shape.

The protective ring 40 is formed in a three-dimensional shape corresponding to a movement locus of a cut end surface shape of the protective ring 40 illustrated in Fig. 2 when the cut end surface shape is rotated once around the central axis AX.

The outer peripheral surface of the abutting portion 41 is circumferentially pressed against the inner peripheral surface 310 of the shaft hole 301.

The material of the protective ring 40 is preferably a metal material, and examples thereof include stainless steel (SUS) and cold rolled steel (SPCC).

The protective ring 40 can be formed by press working or forging.

The conductive lip 50 is formed in a donut shape centered on the central axis AX.

A portion (radially outer portion) of the conductive lip 50 is disposed along a surface facing the outer side 340 in the body inward extending portion 22 of the seal body constituent member 20.

In the present embodiment, a radially inner portion of the conductive lip 50 extends radially inward more than the inward extending portion 42. The radially inner portion of the conductive lip 50 protrudes radially inward from the radially inner end of the body inward extending portion 22.

In the conductive lip 50, a portion extending radially inward more than the inward extending portion 42 is bent toward the outer side 340 (left side in Fig. 2).

The conductive lip 50 is formed in a three-dimensional shape corresponding to a movement locus of a cut end surface shape of the conductive lip 50 illustrated in Fig. 2 when the cut end surface shape is rotated once around the central axis AX.

In the case of the present embodiment, a distal end (radially inner end) of the conductive lip 50 is in contact with the outer peripheral surface 210 of the rotation shaft 200 in a circumferential manner, and electrical conduction between the rotation shaft 200 and the conductive lip 50 can be ensured.

Note that the distal end of the conductive lip 50 slides with respect to the outer peripheral surface 210 when the rotation shaft 200 rotates.

In the present embodiment, the conductive lip 50 is not required to have sealability. Thus, as a material of the conductive lip 50, a material specialized in conductivity can be used, and examples of such a material include conductive rubber and conductive resin. A preferable example of the material of the conductive lip 50 is conductive polytetrafluoroethylene (PTFE).

The gutter spring 60 is configured by a coil spring, both ends of the coil spring are connected to each other, and an axial center of the coil spring is looped in an annular shape. The axial center of the coil spring makes one revolution around the central axis AX. That is, the gutter spring 60 is formed in an annular shape along the circumferential direction.

The gutter spring 60 is a tension type coil spring, and exerts a biasing force in a direction of reducing the axial length thereof. Since the gutter spring 60 has an annular loop shape, the gutter spring 60 exerts a biasing force in a direction of reducing the radius of the loop.

The gutter spring 60 is disposed in a groove formed in a circling shape on the outer peripheral surface (surface facing the cylindrical portion 31) of the lip portion 23, and biases the lip portion 23 radially inward. Therefore, the gutter spring 60 has a function of restraining the lip portion 23 to the rotation shaft 200.

Thus, an inner peripheral edge of the lip portion 23 is favorably brought into pressure contact with the outer peripheral surface 210 of the rotation shaft 200.

Note that, in the lip portion 23, a portion that is brought into pressure contact with the outer peripheral surface 210 is a portion away from the boundary portion between the body inward extending portion 22 and the lip portion 23 (away to the inner side 330). A portion of the lip portion 23 on the body inward extending portion 22 side of a portion pressed against the outer peripheral surface 210 and the boundary portion between the lip portion 23 and the body inward extending portion 22 are not in contact with the outer peripheral surface 210, and a gap is generated between these portions and the outer peripheral surface 210.

In the present embodiment, the seal body constituent member 20 sandwiches the conductive lip 50 together with the inward extending portion 42 of the protective ring 40.

More specifically, of the core metal 30 and the seal body constituent member 20, only the seal body constituent member 20 sandwiches the conductive lip 50 (a radially outer portion of the conductive lip 50) together with the inward extending portion 42, and the core metal 30 does not sandwich the conductive lip 50.

The inward extending portion 42 is disposed along a surface of the body inward extending portion 22 on the outer side 340 (left side in Fig. 2), and the conductive lip 50 is sandwiched between the body inward extending portion 22 and the inward extending portion 42.

In the present embodiment, the seal body constituent member 20 has a recess 22a in which a portion of the conductive lip 50 (the radially outer portion of the conductive lip 50) is disposed. Thus, during and after the assembly of the sealing device 100, the conductive lip 50 can be more stably positioned and fixed with respect to the seal body constituent member 20, and thus the seal body 10. That is, the sealing device 100 is excellent in ease of manufacturing and structural stability.

The recess 22a is formed on a surface of the body inward extending portion 22 on the outer side 340 (left side in Fig. 2). A depth (dimension in a direction along the central axis AX) of the recess 22a is less than a thickness dimension of the conductive lip 50 before being assembled to the seal body 10, and the conductive lip 50 is sandwiched in a compressed state between the inward extending portion 42 and a bottom surface of the recess 22a.

An outer peripheral edge of the conductive lip 50 is positioned by an outer peripheral edge of the recess 22a.

Thus, the conductive lip 50 is fitted against the seal body constituent member 20.

Here, in a radial direction, the distance from an inner peripheral edge to an outer peripheral edge of the conductive lip 50, that is, {(outer diameter of conductive lip 50) - (inner diameter of conductive lip 50)}/2 is shorter than the distance from the outer peripheral surface 210 of the rotation shaft 200 to the inner peripheral surface 310 of the housing 300, that is, {(inner diameter of shaft hole 301) - (outer diameter of rotation shaft 200)}/2. Then, the outer peripheral edge of the conductive lip 50 is located radially inside the contact surface 21a of the seal body constituent member 20. More specifically, the outer peripheral edge of the conductive lip 50 is located radially inside the inner peripheral surface (of the abutting portion 41) of the protective ring 40. Thus, a structure in which the conductive lip 50 is fitted into the recess 22a can be easily achieved.

Since the conductive lip 50 is formed to have such dimensions, the outer peripheral edge of the conductive lip 50 does not reach the inner peripheral surface 310 (separates from the inner peripheral surface 310) (unlike the conductive lip of Patent Document 1 (the pre-seal of Patent Document 1)).

In the present embodiment, the protective ring 40 is fixed to the seal body constituent member 20.

More specifically, the abutting portion 41 of the protective ring 40 is caulked and fixed to the outer peripheral surface of the end of the outer side 340 of the seal body constituent member 20.

In the axial direction, a range in which the abutting portion 41 is disposed substantially overlaps a range in which the body inward extending portion 22 of the seal body constituent member 20 is disposed, and the abutting portion 41 is caulked and fixed to the outer peripheral surface of the boundary portion between the body abutting portion 21 and the body inward extending portion 22.

The sealing device 100 is configured as described above.

An assembling operation of the conductive lip 50 and the protective ring 40 to the seal body 10 can be performed, for example, by first aligning the conductive lip 50 to the seal body 10 and then fitting the protective ring 40 to the seal body 10. That is, after the portion (radially outer portion) of the conductive lip 50 is disposed in the recess 22a of the body inward extending portion 22, the conductive lip 50 and the protective ring 40 can be assembled to the seal body 10 by externally fitting the abutting portion 41 of the protective ring 40 to the seal body constituent member 20.

Here, in a state before the conductive lip 50 is assembled to the seal body 10, the entire conductive lip 50 may have a flat plate shape, or the conductive lip 50 may be bent as illustrated in Fig. 2 from a state before the conductive lip 50 is assembled to the seal body 10.

When the conductive lip 50 before being assembled to the seal body 10 has a flat plate shape (donut shape), the conductive lip 50 is assembled to the seal body 10, and the radially outer portion of the conductive lip 50 is sandwiched and compressed by the inward extending portion 42 and the body inward extending portion 22, so that a distortion occurs in the conductive lip 50. Thus, in the conductive lip 50, the portion extending radially inward more than the inward extending portion 42 is bent toward the inward extending portion 42 side (left side in Fig. 2). This is because an inner peripheral end of the inward extending portion 42 is located radially outside an inner peripheral end of a portion of the body inward extending portion 22 disposed along the conductive lip 50.

The sealing device 100 is fixed to the housing 300. That is, the sealing device 100 is inserted into the shaft hole 301 so that the contact surface 21a and the abutting portion 41 are pressed against and fixed to the inner peripheral surface 310, whereby the sealing device 100 is fixed to the housing 300.

Here, in a state before the rotation shaft 200 is inserted into the sealing device 100, the inner diameter of the conductive lip 50 is preferably smaller than the inner diameter of the lip portion 23.

In this manner, it is possible to achieve a structure in which a contact area between the rotation shaft 200 and the conductive lip 50 is larger than a contact area between the rotation shaft 200 and the lip portion 23 in a state after the rotation shaft 200 is inserted into the sealing device 100. That is, it is possible to achieve a structure in which a distance L2 is longer than a distance L1 illustrated in Fig. 2. This makes it possible to ensure conduction by the conductive lip 50 more reliably.

Note that the lip portion 23 has higher rigidity than the conductive lip 50, and even if the contact area between the rotation shaft 200 and the lip portion 23 is smaller than the contact area between the rotation shaft 200 and the conductive lip 50, the sealing performance by the lip portion 23 can be sufficiently ensured.

### <First Modification of First Embodiment>

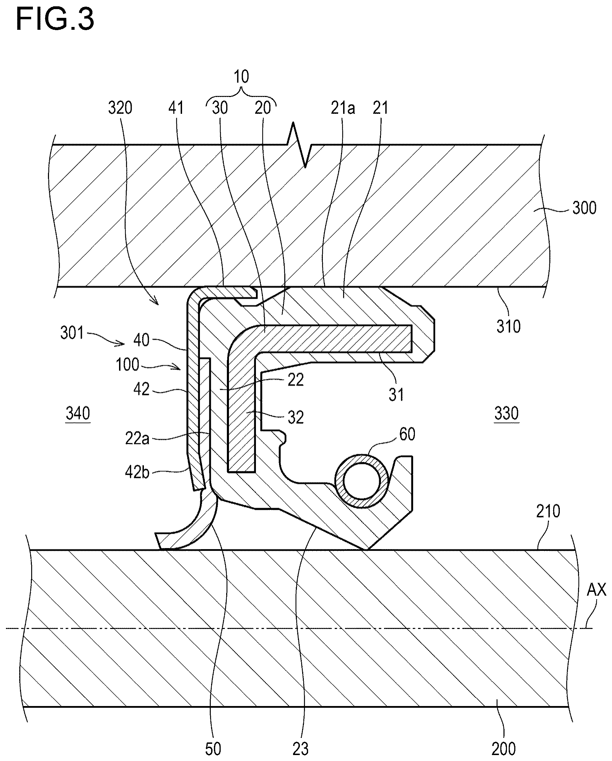

Next, a first modification of the first embodiment will be described with reference to Fig. 3.

A sealing device 100 according to the present modification is different from the sealing device 100 according to the first embodiment in points described below, and is configured similarly to the sealing device 100 according to the first embodiment in the other points.

In the case of the present modification, a radially inner end (edge) of the inward extending portion 42 of the protective ring 40 is a bent portion 42b bent toward the conductive lip 50 side.

Thus, the bent portion 42b presses the conductive lip 50, and thus a state in which the distal end of the conductive lip 50 is always in contact with the outer peripheral surface 210 of the rotation shaft 200 can be maintained. Therefore, it is possible to suppress a decrease in adhesion of the conductive lip 50 to the rotation shaft 200 due to aged deterioration of the conductive lip 50, and it is possible to maintain electrical conduction between the rotation shaft 200 and the housing 300.

More specifically, the bent portion 42b is bent toward one side (inner side 330: right side in Fig. 3) with reference to a portion other than the bent portion 42b in the inward extending portion 42. That is, the bent portion 42b is bent in a direction opposite to a bending direction (left side in Fig. 3) of the conductive lip 50, and presses the conductive lip 50 in this direction.

Thus, the bent portion 42b can press the conductive lip 50 against the rotation shaft 200, and can restrict the conductive lip 50 from being deformed in a direction away from the rotation shaft 200 (radially outward) even if the conductive lip 50 deteriorates over time.

### <Second Modification of First Embodiment>

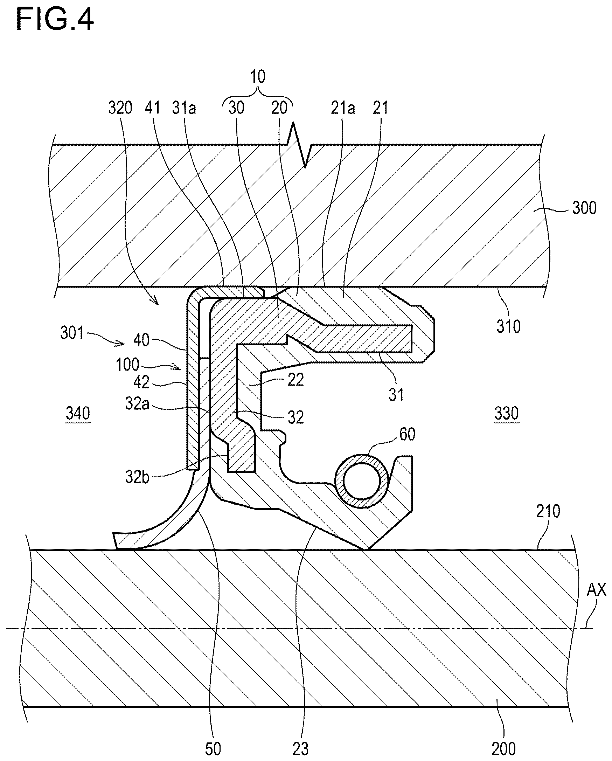

Next, a second modification of the first embodiment will be described with reference to Fig. 4.

A sealing device 100 according to the present modification is different from the sealing device 100 according to the first embodiment in points described below, and is configured similarly to the sealing device 100 according to the first embodiment in the other points.

In the case of the present modification, the core metal 30 sandwiches the conductive lip 50 together with the inward extending portion 42 of the protective ring 40.

Since the core metal 30 is a metal member having higher rigidity than the seal body constituent member 20, the conductive lip 50 can be more stably sandwiched between the inward extending portion 42 and the seal body 10.

More specifically, of the radially outer portion of the conductive lip 50, particularly the radially outer portion is sandwiched between the inward extending portion 42 and the core metal 30, and of the radially outer portion of the conductive lip 50, particularly the radially inner portion is sandwiched between the inward extending portion 42 and the seal body constituent member 20.

However, the present invention is not limited to this example, and in the seal body 10, the portion sandwiching the radially outer portion of the conductive lip 50 together with the inward extending portion 42 may be only the core metal 30.

The core metal inward extending portion 32 is formed in, for example, a flat plate shape orthogonal to the central axis AX except for a radially inner end (edge) (bent portion 32b described below), and the radially inner end is a bent portion 32b bent in a crank shape toward the inner side 330 (right side in Fig. 4). In the core metal inward extending portion 32, a portion formed in a flat plate shape orthogonal to the central axis AX and a boundary portion between the core metal inward extending portion 32 and the cylindrical portion 31 are exposed to the outer surface (surface on the outer side 340) of the seal body 10.

In the core metal inward extending portion 32 of the core metal 30, a portion of the surface facing the outer side 340 (left side in Fig. 4) is a contact surface 32a in surface contact with the conductive lip 50.

In the present modification, the protective ring 40 is fixed to the core metal 30. That is, since the protective ring 40 is fixed to the core metal 30 that is a metal member, the retention of the protective ring 40 to the seal body 10 can be improved.

More specifically, a portion of an outer peripheral surface of a portion from the cylindrical portion 31 of the core metal 30 to the boundary portion between the cylindrical portion 31 and the core metal inward extending portion 32 is exposed to the outer peripheral surface of the seal body 10, and the exposed portion has the contact surface 31a that is in surface contact with the inner peripheral surface of the abutting portion 41 of the protective ring 40.

The abutting portion 41 is directly caulked and fixed to the contact surface 31a. More specifically, the contact surface 31a is exposed at a portion including the end of the outer side 340 on the outer peripheral surface of the seal body 10.

A portion of the cylindrical portion 31 on the core metal inward extending portion 32 side (that is, the outer side 340) and a boundary portion between the cylindrical portion 31 and the core metal inward extending portion 32 bulge (thicken) radially outward from a portion of the cylindrical portion 31 on the inner side 330, and the bulged portion has the contact surface 31a.

Here, in the present modification, the conductive path from the rotation shaft 200 to the housing 300 includes a path passing through the conductive lip 50, the core metal 30, and the protective ring 40 in addition to the path passing through the conductive lip 50 and the protective ring 40. Thus, the electrical resistance of the conductive path from the rotation shaft 200 to the housing 300 can be reduced.

Note that, in this modification, the seal body constituent member 20 does not have the recess 22a.

### <Third Modification of First Embodiment>

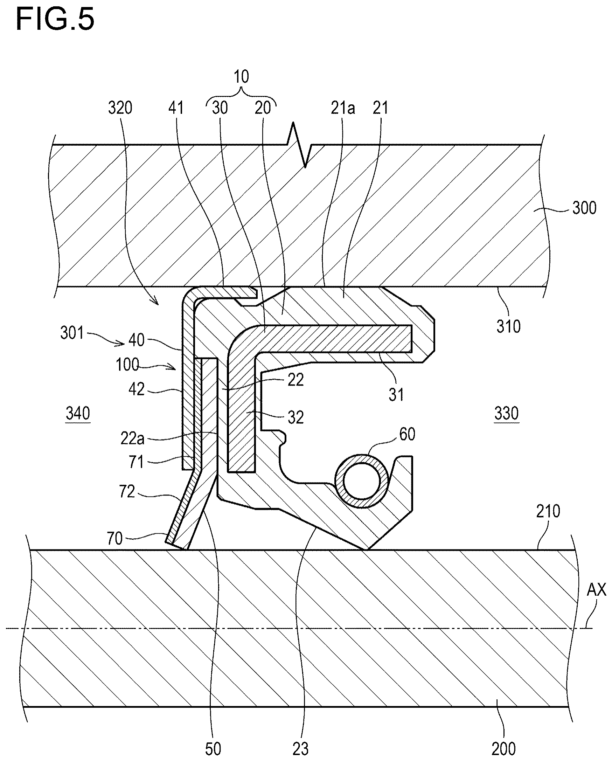

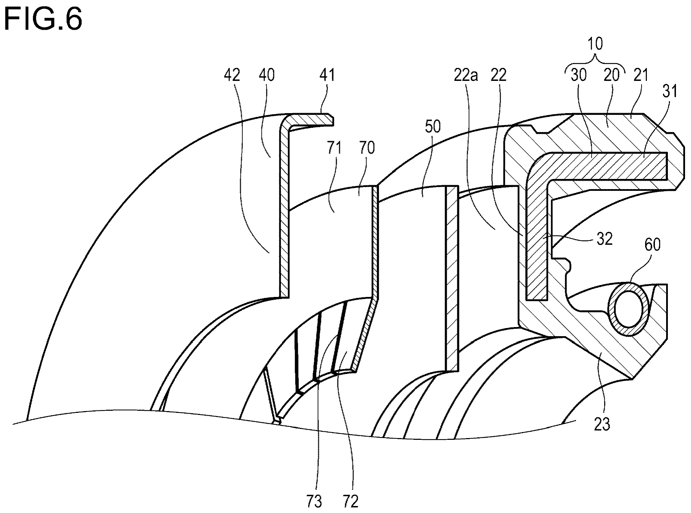

Next, a third modification of the first embodiment will be described with reference to Figs. 5 and 6.

A sealing device 100 according to the present modification is different from the sealing device 100 according to the first embodiment in points described below, and is configured similarly to the sealing device 100 according to the first embodiment in the other points.

In the case of the present modification, the sealing device 100 further includes a disc spring 70 interposed between the inward extending portion 42 of the protective ring 40 and the conductive lip 50, and the disc spring 70 presses a portion of the conductive lip 50 extending radially inward more than the inward extending portion 42 toward the side opposite to the inward extending portion 42 side (that is, the inner side 330).

Thus, a state in which the distal end of the conductive lip 50 is in contact with the outer peripheral surface 210 of the rotation shaft 200 can be maintained. Therefore, it is possible to suppress a decrease in adhesion of the conductive lip 50 to the rotation shaft 200 due to aged deterioration of the conductive lip 50, and it is possible to maintain electrical conduction between the rotation shaft 200 and the housing 300.

The shape of the disc spring 70 is not particularly limited, but as an example, the disc spring 70 includes a flat, donut-shaped body portion 71 orthogonal to the central axis AX, and a plurality of vanes 72 protruding radially inward from an inner peripheral edge of the body portion 71. The vanes 72 are arranged side by side (for example, arranged at equal intervals) along the circumferential direction of the body portion 71. A plurality of slits 73 extending in the radial direction is formed in the vanes 72. The vane 72 is bent toward the outer side 340 with reference to the body portion 71.

However, the disc spring 70 may have an inner peripheral side portion (not shown in the drawings) formed in a shape corresponding to the outer peripheral surface of a truncated cone (truncated cone) centered on the central axis AX instead of the plurality of vanes 72.

The disc spring 70 is preferably constituted by a metal material.

Here, in the present modification, in a state before the conductive lip 50 is sandwiched and compressed by the inward extending portion 42 and the disc spring 70, and the body inward extending portion 22, as illustrated in Fig. 6, the entire conductive lip 50 has a flat plate shape, and the conductive lip 50 is sandwiched and compressed by the inward extending portion 42 and the disc spring 70, and the body inward extending portion 22, whereby the conductive lip 50 is bent as illustrated in Fig. 5. However, the present invention is not limited to this example, and the conductive lip 50 may be bent as illustrated in Fig. 5 before the conductive lip 50 is sandwiched and compressed by the inward extending portion 42 and the disc spring 70, and the body inward extending portion 22.

### <Fourth Modification of First Embodiment>

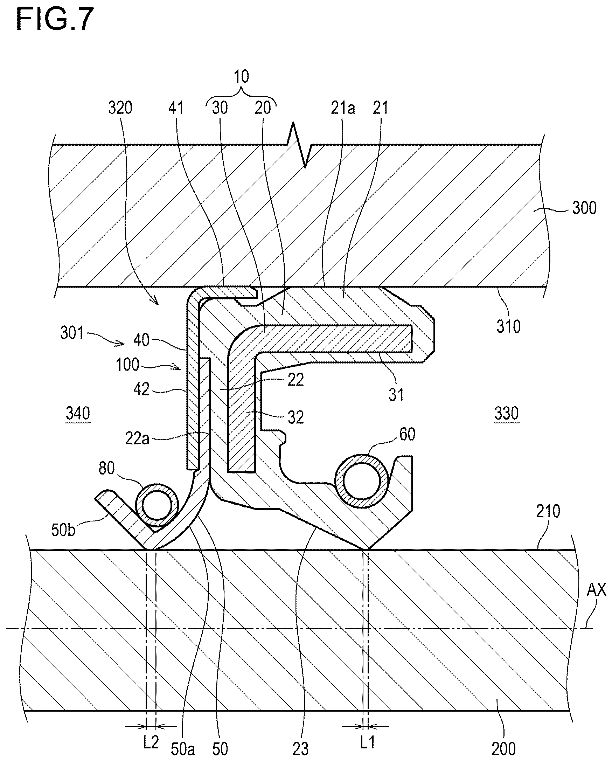

Next, a fourth modification of the first embodiment will be described with reference to Fig. 7.

A sealing device 100 according to the present modification is different from the sealing device 100 according to the first embodiment in points described below, and is configured similarly to the sealing device 100 according to the first embodiment in the other points.

In a case of the present modification, in the conductive lip 50, a portion extending radially inward more than the inward extending portion 42 has a base portion 50a extending radially inward from the inward extending portion 42 and a distal end portion 50b folded back radially outward from a radially inner end of the base portion 50a. The sealing device 100 further includes a gutter spring 80 that is disposed at a boundary between the base portion 50a and the distal end portion 50b and restrains the portion of the conductive lip 50 extending radially inward more than the inward extending portion 42 to the rotation shaft 200.

The gutter spring 80 is similar to the gutter spring 60, and is formed in an annular loop shape along the circumferential direction.

The gutter spring 80 is circumferentially disposed on a surface facing radially outward at a boundary portion between the base portion 50a and the distal end portion 50b of the conductive lip 50. Thus, the gutter spring 80 presses the conductive lip 50 radially inward.

Therefore, according to the present modification, the adhesion of the conductive lip 50 to the rotation shaft 200 can be improved.

Note that, in the case of the present modification, in the conductive lip 50, a portion that slides in contact with the outer peripheral surface 210 of the rotation shaft 200 in a circumferential manner is a portion facing radially inward at the boundary portion between the base portion 50a and the distal end portion 50b.

The portion of the conductive lip 50 extending radially inward more than the inward extending portion 42 is preferably formed to be thicker than the radially outer portion of the conductive lip 50, and with this configuration, it is possible to suppress the conductive lip 50 from being excessively deformed due to the biasing force of the gutter spring 80.

### <Fifth Modification of First Embodiment>

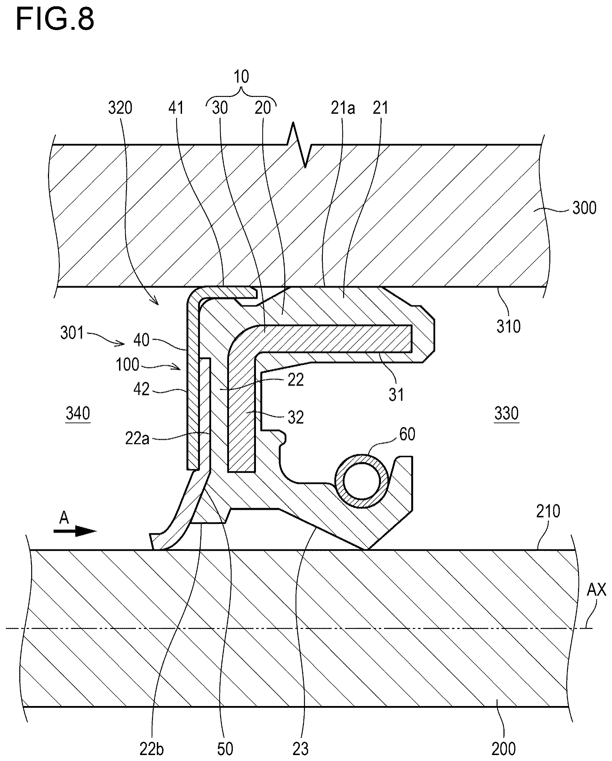

Next, a fifth modification of the first embodiment will be described with reference to Fig. 8.

A sealing device 100 according to the present modification is different from the sealing device 100 according to the first embodiment in points described below, and is configured similarly to the sealing device 100 according to the first embodiment in the other points.

In the case of the present modification, in the seal body 10, a portion disposed along the conductive lip 50 has a backup portion 22b locally protruding radially inward.

Thus, when the mechanism including the sealing device 100 is assembled, even if the portion of the conductive lip 50 extending radially inward more than the inward extending portion 42 is pressed toward the inner side 330 by friction with the rotation shaft 200 when the rotation shaft 200 is inserted in the direction of arrow A in Fig. 8 (inner side 330), the conductive lip 50 is supported by the backup portion 22b, so that it is possible to suppress the conductive lip 50 from being bent toward the inner side 330 and turned up.

More particularly, in the seal body 10, the portion disposed along the conductive lip 50 (and the back-up portion 22b) is a portion of the seal body constituent member 20.

### [Second Embodiment]

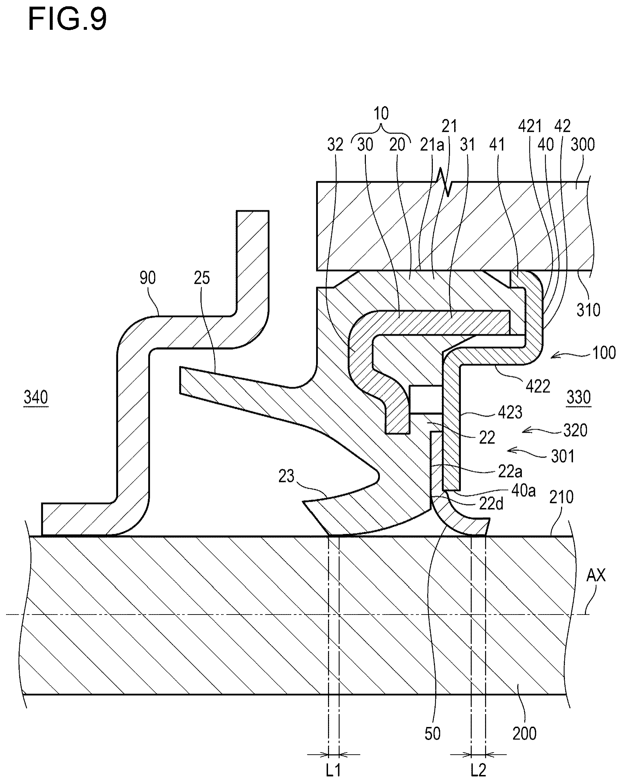

Next, a second embodiment will be described with reference to Fig. 9.

A sealing device 100 according to the present embodiment is different from the sealing device 100 according to the first embodiment in the following points, and is configured similarly to the sealing device 100 according to the first embodiment in the other points.

In the present embodiment, the lip portion 23 of the seal body 10 is a dust lip.

Since the sealing device 100 includes both the seal body 10 having the lip portion 23 as a dust lip and the conductive lip 50, it is possible to achieve both dust sealing performance and conductivity while reducing the number of components and installation space.

By disposing the conductive lip 50 on the inner side 330 of a contact portion between the lip portion 23, which is a dust lip, and the rotation shaft 200, it is possible to impart conductivity without impairing the dust sealing performance.

In particular, it is possible to ensure energization with a small number of components even in a water-soaked environment that has been difficult to apply with an earth brush.

The sealing device 100 suppresses intrusion of foreign matter from the outer side 340 to the inner side 330 by the lip portion 23 and the conductive lip 50.

Note that, in the present embodiment, another oil seal (having an oil lip) may be disposed on the inner side 330 of the conductive lip 50.

In the first embodiment, the portion of the seal body constituent member 20 disposed along the inner peripheral surface 310 has been described as including the body abutting portion 21 and the boundary portion between the body abutting portion 21 and the body inward extending portion 22.

On the other hand, in the present embodiment, the entire portion of the seal body constituent member 20 disposed along the inner peripheral surface 310 is the body abutting portion 21.

Thus, the present embodiment is also the same as the first embodiment in that the body abutting portion 21 of the seal body constituent member 20 has a shape that can be said to be a cylindrical shape.

A portion (a portion on the inner side 330) of the body abutting portion 21 extends in an eaves shape from the radially outer end of the body inward extending portion 22 toward the inner side 330 (the right side in Fig. 9).

In the present embodiment, the lip portion 23 obliquely extends from the radially inner end of the body inward extending portion 22 radially inward and toward the outer side 340 (the left side in Fig. 9).

The seal body constituent member 20 further includes an outward extending portion 25 extending from a surface of the body inward extending portion 22 on the outer side 340 toward the outer side 340. The outward extending portion 25 is disposed radially outside the lip portion 23.

Here, in the case of the present embodiment, a slinger 90 is fixed to the rotation shaft 200. The slinger 90 rotates with the rotation of the rotation shaft 200. The slinger 90 is formed in, for example, a stepped flange shape that is shifted toward the inner side 330 in a stepwise manner toward the radial outside.

The outward extending portion 25 extends toward an inside of a gap between the slinger 90 and the outer peripheral surface 210 of the rotation shaft 200.

The recess 22a is formed on a surface of the body inward extending portion 22 facing the inner side 330.

As in the first embodiment, the conductive lip 50 is disposed in the recess 22a and assembled to the seal body constituent member 20. However, the direction in which the conductive lip 50 is bent is the inner side 330 (the right side in Fig. 9).

The cylindrical portion 31 of the core metal 30 is embedded in the body abutting portion 21. However, a portion of the cylindrical portion 31 may be exposed from the body abutting portion 21 (from the seal body constituent member 20).

The core metal inward extending portion 32 is embedded from the inside of the boundary portion between the body abutting portion 21 and the body inward extending portion 22 to the inside of the body inward extending portion 22. The core metal inward extending portion 32 may be formed in a flat plate flange shape, or may be partially bent along the shape of the seal body constituent member 20.

The abutting portion 41 of the protective ring 40 is formed in a cylindrical shape having an extremely short dimension in the axial direction, and is caulked and fixed to a distal end (distal end on the inner side 330) of a portion extending in an eaves shape as described above in the body abutting portion 21.

The inward extending portion 42 of the protective ring 40 includes an outer flange portion 421, an intermediate cylindrical portion 422, and an inner flange portion 423. The outer flange portion 421 extends radially inward in an inner flange shape from an end of the abutting portion 41 on the inner side 330. The outer flange portion 421 is disposed along the distal end surface (end surface on the inner side 330) of the portion extending in the eaves shape as described above in the body abutting portion 21.

The intermediate cylindrical portion 422 is formed in a cylindrical shape coaxial with the central axis AX. The intermediate cylindrical portion 422 extends from the radially inner end portion of the outer flange portion 421 toward the outer side 340. The intermediate cylindrical portion 422 is disposed along an inner peripheral surface of the portion extending in the eaves shape as described above in the body abutting portion 21.

The inner flange portion 423 extends radially inward in an inner flange shape from an end portion of the intermediate cylindrical portion 422 on the outer side 340 side. The inner flange portion 423 is disposed along a surface of the body inward extending portion 22 facing the inner side 330.

In the case of the present embodiment, a portion of the protective ring 40 sandwiching the conductive lip 50 together with the body inward extending portion 22 is the inner flange portion 423.

Although the embodiments and the modifications have been described above with reference to the drawings, these are examples of the present invention, and various configurations other than the above can be adopted.

For example, in the above description, the example in which the conductive lip 50 is bent has been described, but the conductive lip 50 need not be bent, and the entire conductive lip may be disposed on the same plane.

Further, in the above description, an example has been described in which the abutting portion 41 of the protective ring 40 is alternatively caulked and fixed to the seal body constituent member 20 or the core metal 30, but the abutting portion 41 may be caulked and fixed over the seal body constituent member 20 and the core metal 30.

In addition, the above-described embodiments and modifications can be arbitrarily combined without departing from the gist of the present invention.

The present embodiment includes the following technical ideas.
(1) A sealing device that is disposed in a gap between an outer peripheral surface of a rotation shaft and an inner peripheral surface of a shaft hole in a housing having the shaft hole into which the rotation shaft is inserted to seal the gap, the sealing device including:
   a seal body including a core metal constituted by a metal material and a seal body constituent member constituted by an elastic body and with which the core metal is integrated, the seal body constituent member including a lip portion; and
   a conductive lip and a conductive protective ring attached to the seal body, wherein
   the protective ring includes an abutting portion abutting on the housing, and an inward extending portion extending radially inward from the abutting portion, and
   the conductive lip is integrated with the seal body by being sandwiched between the inward extending portion and the seal body.
(2) The sealing device according to (1), wherein the seal body constituent member sandwiches the conductive lip together with the inward extending portion.
(3) The sealing device according to (2), wherein the seal body constituent member has a recess in which a portion of the conductive lip is disposed.
(4) The sealing device according to any one of (1) to (3), wherein the core metal sandwiches the conductive lip together with the inward extending portion.
(5) The sealing device according to any one of (1) to (4), wherein the protective ring is fixed to the seal body constituent member.
(6) The sealing device according to any one of (1) to (5), wherein the protective ring is fixed to the core metal.
(7) The sealing device according to any one of (1) to (6), wherein a radially inner end of the inward extending portion is a bent portion bent toward a side of the conductive lip.
(8) The sealing device according to any one of (1) to (6), further including a disc spring interposed between the inward extending portion and the conductive lip, wherein
   the disc spring presses a portion of the conductive lip extending radially inward more than the inward extending portion toward a side opposite to a side of the inward extending portion.
(9) The sealing device according to any one of (1) to (8), wherein in the seal body, a portion disposed along the conductive lip has a backup portion locally protruding radially inward.
(10) The sealing device according to any one of (1) to (9), wherein the lip portion is an oil lip.
(11) The sealing device according to any one of (1) to (9), wherein the lip portion is a dust lip.

This application claims priority based on Japanese Patent Application No. 2023-37276 filed on March 10, 2023, the entire disclosure of which is incorporated herein.

### REFERENCE SIGNS LIST

- 10: Seal body
- 20: Seal body constituent member
- 21: Body abutting portion
- 21a: Contact surface
- 22: Body inward extending portion
- 22a: Recess
- 22b: Backup portion
- 23: Lip portion
- 25: Outward extending portion
- 30: Core metal
- 31: Cylindrical portion
- 31a: Contact surface
- 32: Core metal inward extending portion
- 32a: Contact surface
- 32b: Bent portion
- 40: Protective ring
- 41: Abutting portion
- 42: Inward extending portion
- 42b: Bent portion
- 50: Conductive lip
- 50a: Base portion
- 50b: Distal end portion
- 60: Gutter spring
- 70: Disc spring
- 71: Body portion
- 72: Vane
- 73: Slit
- 80: Gutter spring
- 90: Slinger
- 100: Sealing device
- 200: Rotation shaft
- 210: Outer peripheral surface
- 300: Housing
- 301: Shaft hole
- 310: Inner peripheral surface
- 320: Gap
- 330: Inner side
- 340: Outer side
- 421: Outer flange portion
- 422: Intermediate cylindrical portion
- 423: Inner flange portion
- 1000: Sealing device
- 1201: First rotation shaft
- 1202: Second rotation shaft
- 1203: Third rotation shaft
- 1220: Gear
- 1300: Housing
- 1400: Bearing
- 1500: Battery
- 1600: Inverter
- 1700: Electric motor
- 1800: Wheel
- 1900: Speed reducer

## Claims

1. A sealing device that is disposed in a gap between an outer peripheral surface of a rotation shaft and an inner peripheral surface of a shaft hole in a housing having the shaft hole into which the rotation shaft is inserted to seal the gap, the sealing device comprising:
a seal body including a core metal constituted by a metal material and a seal body constituent member constituted by an elastic body and with which the core metal is integrated, the seal body constituent member including a lip portion; and
a conductive lip and a conductive protective ring attached to the seal body, wherein
the protective ring includes an abutting portion abutting on the housing, and an inward extending portion extending radially inward from the abutting portion, and
the conductive lip is integrated with the seal body by being sandwiched between the inward extending portion and the seal body.

2. The sealing device according to claim 1, wherein the seal body constituent member sandwiches the conductive lip together with the inward extending portion.

3. The sealing device according to claim 2, wherein the seal body constituent member has a recess in which a portion of the conductive lip is disposed.

4. The sealing device according to claim 1, wherein the core metal sandwiches the conductive lip together with the inward extending portion.

5. The sealing device according to any one of claims 1 to 4, wherein the protective ring is fixed to the seal body constituent member.

6. The sealing device according to any one of claims 1 to 5, wherein the protective ring is fixed to the core metal.

7. The sealing device according to any one of claims 1 to 6, wherein a radially inner end of the inward extending portion is a bent portion bent toward a side of the conductive lip.

8. The sealing device according to any one of claims 1 to 6, further comprising a disc spring interposed between the inward extending portion and the conductive lip,
wherein
the disc spring presses a portion of the conductive lip extending radially inward more than the inward extending portion toward a side opposite to a side of the inward extending portion.

9. The sealing device according to any one of claims 1 to 8, wherein in the seal body, a portion disposed along the conductive lip has a backup portion locally protruding radially inward.

10. The sealing device according to any one of claims 1 to 9, wherein the lip portion is an oil lip.

11. The sealing device according to any one of claims 1 to 9, wherein the lip portion is a dust lip.
